# DEMANDE DE BREVET EUROPEEN

(11) **EP 3 404 480 A1**
(43) Date de publication de la demande: **21.11.2018**
(21) Numéro de dépôt: 18171765.3
(22) Date de dépôt: 11.05.2018
(51) Int. Cl.: G03B 17/02, B60R 11/04, G02B 27/00, B08B 7/00

(54) **DISPOSITIF DE PROTECTION D'UN CAPTEUR OPTIQUE, SYSTÈME D'ASSISTANCE À LA CONDUITE ET PROCÉDÉ D'ASSEMBLAGE CORRESPONDANTS**

(30) Priorité: 17.05.2017 FR 1754334
(71) Demandeur: Valeo Systèmes d'Essuyage, 78322 Le Mesnil Saint Denis (FR)
(72) Inventeur: TREBOUET, Marcel, 78322 Le Mesnil Saint Denis (FR); BRETAGNOL, Frédéric, 63500 ISSOIRE (FR); GRASSO, Giuseppe, 63500 ISSOIRE (FR)
(74) Mandataire: Valeo Systèmes d'Essuyage

(57) **Abrégé**

L'invention concerne un dispositif de protection (3) d'un capteur optique (13) de système d'assistance (1) à la conduite pour véhicule automobile (100), le capteur optique (13) comprenant une optique (14),

Selon l'invention, le dispositif de protection (3) comporte deux sous-ensembles (B, C) distincts assemblés, dont :
- un premier sous-ensemble (B) est monté mobile en rotation autour d'un axe de rotation (Al) et comporte :
• un boitier (6) configuré pour recevoir au moins en partie le capteur optique (13) et
• un élément optique (9) configuré pour être disposé en amont de l'optique (14) du capteur optique (13), et

- un deuxième sous-ensemble (C) comporte un actionneur (5) configuré pour entrainer en rotation le premier sous-ensemble (B).

L'invention concerne également un système d'assistance à la conduite et un procédé d'assemblage correspondants.

## Description

La présente invention se rapporte au domaine de l'aide à la conduite et notamment aux systèmes d'assistance à la conduite, implantés sur certains véhicules, le système d'assistance à la conduite pouvant comporter un capteur optique, comme par exemple une caméra comprenant un objectif, notamment comprenant au moins une lentille. Plus particulièrement, l'invention concerne un dispositif de protection d'un tel capteur optique. L'invention concerne également un procédé d'assemblage d'un tel dispositif de protection.

Actuellement, des caméras de vision avant, arrière, ou encore latérales équipent un grand nombre de véhicules automobiles. Elles font notamment partie de systèmes d'assistance à la conduite, tels que des systèmes d'aide au stationnement, ou encore des systèmes de détection de franchissement de ligne.

On connait des caméras qui sont installées à l'intérieur de l'habitacle d'un véhicule contre la lunette / vitre arrière en visant vers l'arrière depuis la lunette arrière du véhicule. Ces caméras sont bien protégées des aléas climatiques extérieurs et des salissures causées par des polluants organiques ou minéraux. Cependant, l'angle de vue pour de telles caméras, installées à l'intérieur de l'habitacle, n'est pas optimal, en particulier pour une aide au stationnement, car elles ne permettent pas de voir les obstacles se trouvant à proximité de l'arrière du véhicule par exemple.

Pour cette raison, on préfère donc installer les caméras des systèmes d'assistance à la conduite, à l'extérieur des véhicules à différents endroits selon l'utilisation souhaitée, par exemple au niveau du pare-chocs arrière ou avant, ou au niveau de la plaque d'immatriculation arrière ou avant du véhicule. Dans ce cas, la caméra est donc fortement exposée aux projections de saletés minérales ou organiques qui peuvent se déposer sur son optique et ainsi réduire son efficacité, voire la rendre inopérante. En particulier par temps de pluie, on constate des projections de pluie et de saletés qui peuvent grandement affecter l'opérabilité du système d'assistance à la conduite comprenant une telle caméra. Les surfaces des optiques des caméras doivent être nettoyées afin de garantir leur bon état de fonctionnement.

Pour contrer le dépôt de saletés sur la caméra, il est connu d'agencer un dispositif de nettoyage de l'optique de la caméra, généralement un gicleur de liquide de nettoyage, à proximité de celle-ci, pour supprimer les éléments polluants qui se sont déposés au cours du temps. Cependant, l'utilisation de ces gicleurs entraine une augmentation des couts de fonctionnement d'un tel système d'assistance à la conduite car ils nécessitent l'utilisation de quantités de liquide de nettoyage assez importantes.

Selon une solution connue, des moyens de vibration d'une vitre de protection de la caméra sont prévus afin d'en décoller les saletés de la vitre de protection de la caméra. Toutefois, il a été constaté que l'efficacité d'un tel dispositif pour des salissures tenaces et incrustées peut être limitée malgré la vibration de la vitre de protection.

Selon une autre solution, la caméra est agencée dans un dispositif de protection. Cependant, un tel dispositif de protection est très encombrant à installer. Or, la réduction de l'encombrement est un objectif constant dans le domaine automobile, et plus particulièrement dans le domaine de l'aide à la conduite.

Enfin, l'assemblage de ces dispositifs de protection avec la caméra pour le montage sur le véhicule automobile n'est pas optimisé.

La présente invention se propose de pallier au moins partiellement les inconvénients ci-dessus mentionnés en présentant une alternative d'un dispositif de protection d'un capteur optique permettant d'empêcher le dépôt de salissures sur le capteur optique tel qu'une caméra.

La présente invention vise également à réduire l'encombrement et à faciliter l'assemblage du dispositif de protection.

À cet effet l'invention a pour objet un dispositif de protection d'un capteur optique de système d'assistance à la conduite pour véhicule automobile, le capteur optique comprenant une optique,
caractérisé en ce que le dispositif de protection comporte deux sous-ensembles distincts assemblés, dont :
- un premier sous-ensemble est monté mobile en rotation autour d'un axe de rotation et comporte un boitier configuré pour recevoir au moins en partie le capteur optique et un élément optique configuré pour être disposé en amont de l'optique du capteur optique, et
- un deuxième sous-ensemble comporte un actionneur configuré pour entrainer en rotation le premier sous-ensemble.

On entend par « distincts », le fait que les deux sous-ensembles peuvent être réalisés distinctement, indépendamment l'un de l'autre. Seule l'interface d'assemblage entre les deux sous-ensembles doit être conçue ou adaptée pour permettre l'assemblage des deux sous-ensembles. L'interface d'assemblage peut être adaptée par exemple au niveau de l'actionneur et/ou au niveau du boitier.

Ceci offre une liberté quant au capteur optique destiné à être monté dans le dispositif de protection en étant agencé derrière l'élément optique de façon à être protégé par le premier sous-ensemble. En effet, tout type de capteur optique peut être entouré par le premier sous-ensemble et le support du capteur optique peut être adapté pour s'enficher dans le deuxième sous-ensemble.

En outre, le deuxième sous-ensemble n'est pas agencé à l'intérieur du premier sous-ensemble. Le boitier ne doit donc pas être surdimensionné de façon à loger également l'actionneur.

Enfin, ces deux sous-ensembles peuvent être assemblés entre eux et montés sur un véhicule automobile sans nécessiter de support commun supplémentaire.

Ledit dispositif de protection du capteur optique peut en outre comporter une ou plusieurs caractéristiques suivantes, prises séparément ou en combinaison :
- l'actionneur est un moteur comprenant un stator et un rotor ;
- ledit dispositif comporte au moins un moyen d'assemblage porté par le premier sous-ensemble et/ou porté par le deuxième sous-ensemble ;
- ledit dispositif comporte au moins un premier moyen d'assemblage porté par le premier sous-ensemble ;
- le boitier du premier sous-ensemble présente à sa périphérie au moins un premier moyen d'assemblage ;
- le boitier présente une jupe périphérique formant un premier moyen d'assemblage ;
- le premier moyen d'assemblage, tel que la jupe périphérique, est agencé du côté opposé à l'élément optique ;
- ledit dispositif comporte au moins un deuxième moyen d'assemblage porté par le deuxième sous-ensemble ;
- ledit au moins un deuxième moyen d'assemblage est configuré pour coopérer avec ledit au moins un premier moyen d'assemblage ;
- ledit au moins un deuxième moyen d'assemblage est prévu à la périphérie d'un élément de l'actionneur du deuxième sous-ensemble ;
- l'élément de l'actionneur portant le deuxième moyen d'assemblage est agencé en regard du boitier ;
- ledit au moins un deuxième moyen d'assemblage comporte une gorge périphérique ;
- la gorge périphérique est complémentaire de la jupe périphérique du premier moyen d'assemblage ;
- l'actionneur est assemblé au boitier du côté opposé à l'élément optique ;
- le rotor présente ledit au moins un deuxième moyen d'assemblage ;
- ledit dispositif comporte au moins un moyen de verrouillage du premier sous-ensemble assemblé au deuxième sous-ensemble ;
- le moyen de verrouillage peut être choisi parmi un moyen d'encliquetage, de collage, de soudage, ou encore de soudage ultrasons ;
- l'élément optique est réalisé d'une seule pièce avec le boitier ;
- l'élément optique est disposé de façon centrée par rapport à l'axe de rotation du premier sous-ensemble ;
- ledit dispositif comporte en outre un support du capteur optique ;
- le moteur est creux ;
- le moteur creux est configuré pour recevoir une connectique du capteur optique, notamment pour l'alimentation et/ou traitement du signal ;
- le stator est creux de manière à recevoir au moins en partie le support du capteur optique ;
- le rotor est creux de manière à recevoir au moins en partie le support du capteur optique ;
- le moteur est un moteur sans balais comprenant des bobines électromagnétiques montées solidaires du stator et un aimant solidaire du rotor ;
- ledit dispositif comporte au moins deux roulements ;
- le deuxième sous-ensemble comporte au moins deux roulements agencé entre une partie fixe et une partie mobile du dispositif de protection ;
- le deuxième sous-ensemble comporte au moins un roulement magnétique agencé entre la partie fixe et la partie mobile du dispositif de protection, notamment entre le stator et le rotor du moteur, ou entre le rotor et le support du capteur optique.

L'invention concerne également un système d'assistance à la conduite comportant un capteur optique comprenant une optique. Selon l'invention, ledit système comporte un dispositif de protection du capteur optique tel que défini précédemment.

Selon un aspect de l'invention, l'élément optique est disposé de façon centrée par rapport au capteur optique.

L'invention concerne encore un procédé d'assemblage du dispositif de protection tel que défini précédemment, comprenant les étapes suivantes :
- on réalise d'une part le premier sous-ensemble comportant le boitier configuré pour recevoir au moins en partie le capteur optique et l'élément optique configuré pour être disposé en amont de l'optique du capteur optique,
- on réalise d'autre part le deuxième sous-ensemble comportant l'actionneur configuré pour entrainer en rotation le premier sous-ensemble, et
- on assemble les deux sous-ensembles.

Ainsi, les deux sous-ensembles peuvent être assemblés de façon simple permettant un montage rapide du dispositif de protection.

En particulier, les deux sous-ensembles peuvent être reçus prêts à être assemblés l'un à l'autre. Il n'y a pas d'opération supplémentaire à prévoir par exemple pour disposer le moteur dans le boitier avant de pouvoir agencer le capteur optique et solidariser l'élément optique au boitier. Il n'est pas non plus nécessaire de prévoir une opération supplémentaire pour disposer les deux sous-ensembles côte à côte par exemple dans un support commun avant de pouvoir monter l'ensemble sur un véhicule automobile.

Selon un aspect de l'invention, ledit procédé comprend les sous-étapes suivantes dans lesquelles :
- on monte le capteur optique sur un support, et
- on agence le support du capteur optique à l'intérieur d'un élément creux de l'actionneur du deuxième sous-ensemble.

Selon un autre aspect de l'invention, le premier sous-ensemble et le deuxième sous-ensemble sont assemblés l'un à l'autre selon une direction parallèle à l'axe optique du capteur optique.

Avantageusement, le premier sous-ensemble et le deuxième sous-ensemble sont assemblés de façon à être alignés selon l'axe optique du capteur optique.

D'autres caractéristiques et avantages de l'invention apparaitront plus clairement à la lecture de la description suivante, donnée à titre d'exemple illustratif et non limitatif, et des dessins annexés parmi lesquels :
- la figure 1 représente de façon schématique un véhicule automobile comprenant un système d'assistance à la conduite selon l'invention,
- la figure 2a est une vue en perspective d'un dispositif de protection d'un capteur optique du système d'assistance de la figure 1 comprenant un premier et un deuxième sous-ensemble,
- la figure 2b est une vue éclatée de la figure 2a,
- la figure 2c est une vue en perspective du dispositif de protection de la figure 2a avec une coupe longitudinale partielle du deuxième sous-ensemble,
- la figure 3a est une vue en coupe longitudinale partielle du dispositif de protection des figures 2a à 2c,
- la figure 3b est une vue éclatée de la figure 3a,
- la figure 4 est une vue en coupe transversale du deuxième sous-ensemble du dispositif de protection des figures 2a à 3b,
- la figure 5 est une variante du dispositif de protection,
- la figure 6 est une autre variante du dispositif de protection, et
- les figures 7a à 7i illustrent des étapes d'assemblage du dispositif de protection des figures 2a à 3b.

Sur ces figures, les éléments identiques portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent à un seul mode de réalisation. De simples caractéristiques de différents modes de réalisation peuvent également être combinées ou interchangées pour fournir d'autres réalisations.

Dans la description, on peut indexer certains éléments, comme par exemple premier élément ou deuxième élément. Dans ce cas, il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps.

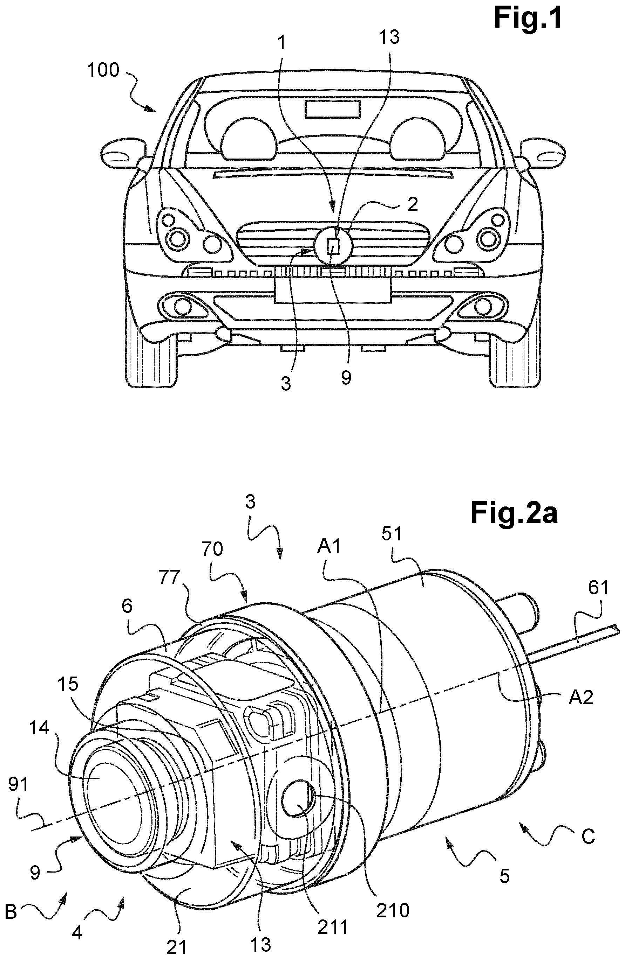

La figure 1 montre un véhicule automobile 100 équipé d'au moins un système d'assistance à la conduite 1 selon l'invention.

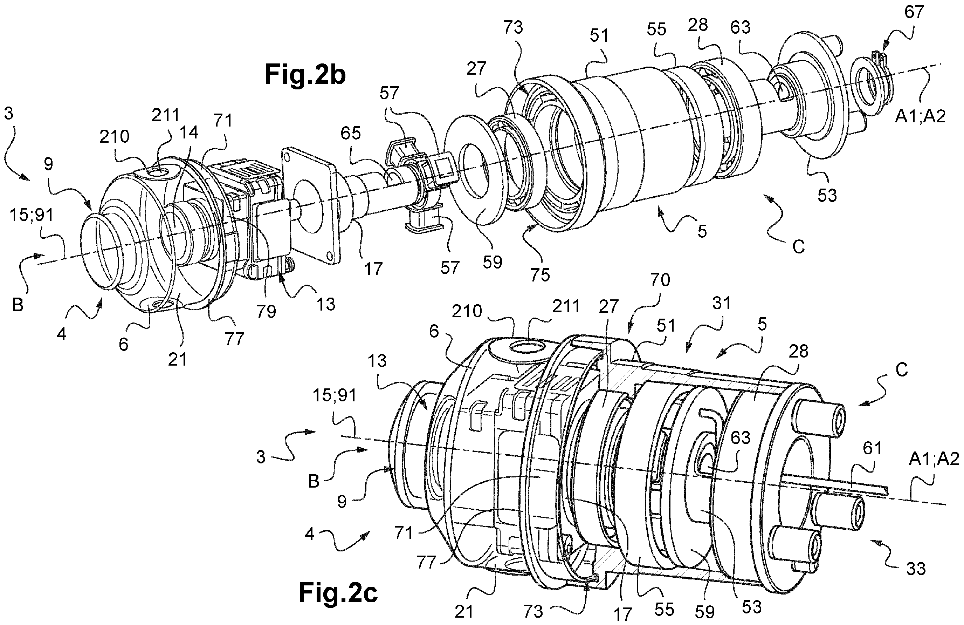

Le système d'assistance à la conduite 1 comporte notamment au moins un capteur optique 13 et un dispositif de protection 3 du capteur optique 13 mieux visible sur les figures 2a à 3b.

Le capteur optique 13 est par exemple un capteur optique 13 de prise de vues tel qu'une caméra. Il peut s'agir d'un capteur CCD (pour "charged coupled device" en anglais à savoir un dispositif à transfert de charge) ou d'un capteur CMOS comportant une matrice de photodiodes miniatures. Selon une autre variante, il peut s'agir d'un capteur pour télédétection par laser dit capteur LIDAR, acronyme en anglais de "light détection and ranging".

Comme cela est mieux visible sur les figures 2a à 3b, le capteur optique 13 comporte une optique 14 d'axe optique 15. L'optique 14 est par exemple un objectif. Un objectif peut comporter au moins une lentille, en particulier plusieurs lentilles suivant le champ de vision et la résolution, par exemple entre deux et dix lentilles, généralement quatre ou cinq lentilles, voire dix lentilles dans le cas d'une optique dite oeil de poisson ("fish-eye" en anglais). Au moins une des lentilles de l'optique 14 est par exemple convexe (bombée) de convexité orientée vers l'extérieur du capteur optique 13, par exemple pour une optique dite oeil de poisson ("fish-eye" en anglais).

On peut prévoir de plus un support 17 (figures 2b à 3b) du capteur optique 13. Ce support 17 est agencé à l'arrière du capteur optique 13 du côté opposé à l'optique 14.

Selon le mode de réalisation illustré, le capteur optique 13 est destiné à être monté dans le dispositif de protection 3. Plus précisément, le capteur optique 13 et notamment son support 17 sont destinés à être montés fixes dans le dispositif de protection 3.

Selon l'exemple illustré sur la figure 1, le dispositif de protection 3 est monté à l'avant du véhicule 100 au niveau d'un pare-chocs. Bien entendu, en variante le dispositif de protection 3 peut être monté à l'arrière du véhicule 100, par exemple au niveau du pare-chocs ou de la plaque d'immatriculation. Il peut aussi par exemple être monté sur les côtés du véhicule, par exemple au niveau des rétroviseurs.

Le dispositif de protection 3 peut être fixé selon toute technique connue, sur tout élément 2 du véhicule 100, tel qu'un élément de carrosserie ou un élément extérieur tel qu'un pare-chocs, un rétroviseur ou une plaque d'immatriculation. À cet effet, on peut citer de façon non exhaustive un système de clips, un système de vissage, ou encore un système de collage.

### Dispositif de protection

Plus précisément, en se référant aux figures 2a à 6, le dispositif de protection 3 comporte un premier sous-ensemble B et un deuxième sous-ensemble C distincts et assemblés l'un à l'autre. Autrement dit, les deux sous-ensembles B et C forment, lorsqu'ils sont assemblés, le dispositif de protection 3.

Avantageusement, ces deux sous-ensembles B et C sont alignés selon l'axe optique 15 du capteur optique 13.

Le premier sous-ensemble B est monté mobile en rotation autour d'un axe de rotation A1. Selon le mode de réalisation décrit, ce premier sous-ensemble B forme un accessoire 4 pour véhicule automobile 100 ayant pour fonction la protection du capteur optique 13. Le premier sous-ensemble B comporte un boitier 6 configuré pour recevoir au moins en partie le capteur optique 13 et un élément optique 9 configuré pour être disposé en amont de l'optique 14 du capteur optique 13. Au moins certains éléments du premier sous-ensemble B peuvent être en partie ou complètement transparents.

Le deuxième sous-ensemble C comporte un actionneur 5, plus précisément un moteur 5, configuré pour entrainer en rotation le premier sous-ensemble B. Le dispositif de protection 3 est donc un dispositif motorisé.

Les différents éléments de ces deux sous-ensembles B et C sont décrits plus en détail ci-après.

### Premier sous-ensemble

L'élément optique 9 est solidaire du boitier 6 (voir figures 2a à 3b, 5 et 6). L'élément optique 9 peut être réalisé d'une seule pièce avec le boitier 6. En alternative, le boitier 6 et l'élément optique 9 peuvent être réalisés par deux pièces distinctes solidarisées.

Le boitier 6 et l'élément optique 9 sont mobiles en rotation autour de l'axe de rotation A1. L'axe de rotation A1 du boitier 6 et de l'élément optique 9 est avantageusement confondu avec l'axe optique 15 du capteur optique 13.

Plus précisément, le boitier 6 est agencé de façon à être entrainé en rotation par le moteur 5, ce qui permet d'entrainer la rotation de l'élément optique 9. L'élément optique 9 est donc entrainé en rotation avec le boitier 6, de façon à permettre un nettoyage de l'élément optique 9 par effet centrifuge.

De préférence, le boitier 6 est un boitier étanche. Le boitier 6 peut être réalisé en tout matériau approprié connu de l'homme du métier.

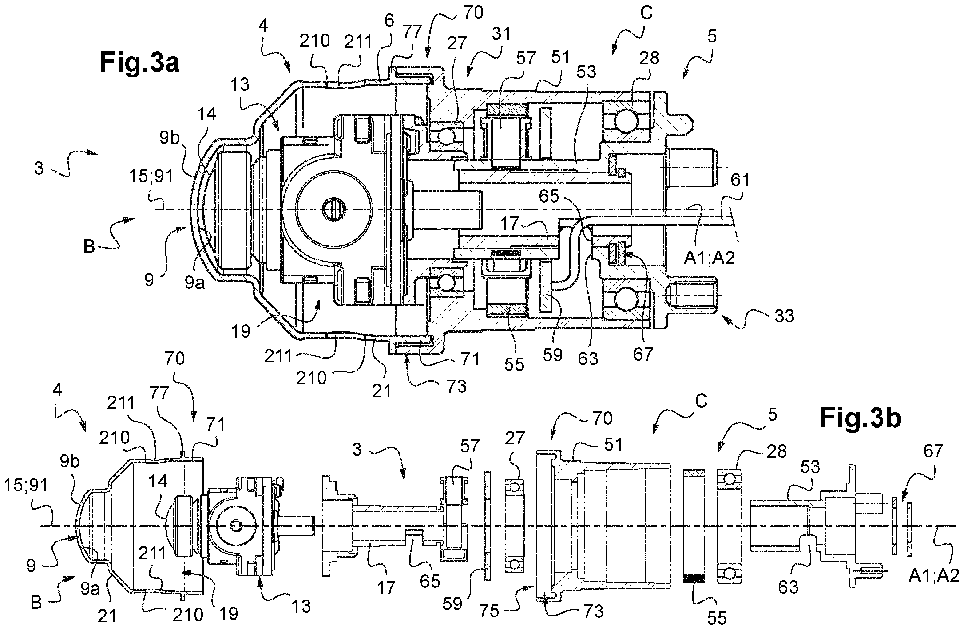

Le capteur optique 13 est monté au moins en partie dans le boitier 6. Pour ce faire, le boitier 6 comporte un logement 19 (voir figures 3a, 3b) configuré pour recevoir le capteur optique 13. Plus précisément, le boitier 6 comporte une paroi 21 définissant le logement 19 pour le capteur optique 13.

Cette paroi 21 peut être centrée autour de l'axe de rotation A1 de l'élément optique 9 et du boitier 6. Dans cet exemple, la paroi 21 est de forme générale sensiblement cylindrique.

La paroi 21 peut être réalisée d'une seule pièce avec l'élément optique 9. En variante, la paroi 21 et l'élément optique 9 peuvent être réalisées par deux pièces distinctes solidarisées. Il s'agit en particulier de l'extrémité avant de la paroi 21 qui est solidarisée à l'élément optique 9. À titre d'exemple non limitatif, la solidarisation entre la paroi 21 et l'élément optique 9 peut se faire par soudure par ultrasons. Ainsi, le boitier 6 et l'élément optique 9 peuvent être réalisés en une ou plusieurs pièces. Le boitier 6 étant solidaire de l'élément optique 9, cela forme un bloc étanche empêchant ainsi l'introduction de salissures à l'intérieur du boitier 6 destiné à recevoir le capteur optique 13.

En variante ou en complément, on prévoit avantageusement au moins un moyen de limitation de la condensation, appelé par la suite moyen anti-condensation. Un tel moyen anti-condensation peut être prévu au niveau du boitier 6. En particulier, au moins un moyen anti-condensation peut être agencé sur la paroi 21 du boitier 6.

À titre d'exemple non limitatif, le moyen anti-condensation peut comprendre au moins un orifice 210 traversant au niveau du boitier 6, dans cet exemple sur la paroi 21 (voir figures 2a à 3b). Le ou les orifices 210 peuvent être réalisés par perçage. De préférence, lorsque plusieurs orifices 210 sont prévus, ils sont agencés de façon symétrique par rapport à l'axe de rotation A1 du boitier 6.

Selon l'exemple illustré sur les figures 3a et 3b, deux orifices 210 sont prévus, agencés de façon symétrique par rapport à l'axe de rotation A1 du boitier 6. Les orifices 210 communiquent entre l'intérieur du boitier 6 et l'extérieur du boitier 6 lorsque le dispositif de protection 3 est assemblé. À titre d'exemple non limitatif, chaque orifice 210 peut présenter un diamètre de l'ordre de 5mm.

De plus, on peut prévoir une ou plusieurs membranes 211 semi-perméables, respectivement agencées au moins au niveau d'un orifice 210. Deux membranes 211 sont représentées de façon schématique sur les figures 3a et 3b. Chaque membrane 211 peut être fixée sur un orifice 210 associé de manière étanche, par exemple par collage ou encore par soudure par ultrasons. Ces membranes 211 sont, selon les modes de réalisation décrits, perméables à l'air et imperméables à l'eau. La ou les membranes 211 favorisent ainsi la circulation de l'air à l'intérieur du boitier 6. Ceci permet une bonne ventilation entre l'optique 14 et l'élément optique 9 et empêche ainsi l'accumulation de condensation.

Avantageusement, on prévoit en outre au moins un moyen de compensation de la masse enlevée au niveau de l'orifice 210 ou des orifices 210. Selon l'exemple particulier illustré sur les figures 3a et 3b, les deux membranes 211 sont placées de façon symétrique par rapport à l'axe de rotation A1 du boitier 6 et c'est cet agencement symétrique qui permet de limiter les effets de masse par rapport à la force centrifuge lors de la rotation du boitier 6.

L'élément optique 9, quant à lui, est destiné à protéger l'optique 14 du capteur optique 13 des projections éventuelles de salissures ou débris solides qui pourraient abimer cette optique 14. Il s'agit donc d'un élément de protection, ou plus précisément d'un masque de protection du capteur optique 13, et c'est cet élément optique 9 qui est soumis aux agressions provenant de l'extérieur, c'est-à-dire aussi bien des projections d'eau, de polluants, de graviers que des dépôts de polluants ou des traces d'eau.

Lorsque le dispositif de protection 3 est monté sur le véhicule 100 (en se référant également à la figure 1), l'optique 14 et l'élément optique 9 font avantageusement saillie d'une ouverture prévue sur l'élément 2 du véhicule 100.

Selon le mode de réalisation décrit, l'élément optique 9 est distinct du capteur optique 13.

Cet élément optique 9 présente un axe optique 91.

L'élément optique 9 est agencé à l'avant du dispositif de protection 3. Dans l'exemple illustré, l'élément optique 9 est agencé à l'avant de l'accessoire 4, ou encore à l'avant du boitier 6. L'avant du boitier 6, ou plus généralement du dispositif de protection 3, s'entend de la partie destinée à faire face à la scène de route dont le capteur optique 13 participe à la prise de vues, lorsque le dispositif de protection 3 est monté sur le véhicule 100 (en se référant également à la figure 1). Par opposition, l'arrière du boitier 6, respectivement du dispositif de protection 3, s'entend de la partie opposée à l'avant ; il s'agit donc la partie la plus éloignée de la scène de route dont le capteur optique 13 participe à la prise de vues.

En outre, l'élément optique 9 est destiné à être disposé en amont du capteur optique 13, plus précisément en amont de l'optique 14 (figures 2a à 3b, 5, 6). Dans la présente, le terme amont est défini par rapport à l'axe optique 15 et par rapport à la scène de route dont le capteur optique 13 participe à la prise de vues. Autrement dit, on comprend par « en amont » de l'optique 14, une position dans laquelle l'élément optique 9 est disposé entre l'optique 14 et la scène de route dont le capteur optique 13 participe à la prise de vues, selon l'axe optique 15.

Cet élément optique 9 est avantageusement dimensionné de façon à recouvrir toute la surface de l'optique 14. L'élément optique 9 est donc agencé dans le champ de vision du capteur optique 13. À cet effet, l'élément optique 9 est transparent afin de ne pas nuire à l'efficacité du capteur optique 13. Cet élément optique 9 peut être réalisé en verre ou en un matériau plastique transparent tel que du polycarbonate.

L'élément optique 9 peut être agencé de façon centrée par rapport au capteur optique 13, plus précisément de façon centrée par rapport à l'optique 14. L'élément optique 9 est agencé de sorte que son axe optique 91 est confondu avec l'axe optique 15 du capteur optique 13.

L'axe optique 91 est dans cet exemple également confondu avec l'axe de rotation A1 de l'élément optique 9. Autrement dit, l'élément optique 9 peut être disposé de façon centrée par rapport à l'axe de rotation A1.

L'élément optique 9 peut présenter notamment une symétrie de révolution par rapport à l'axe de rotation A1.

Selon le mode de réalisation décrit, l'élément optique 9 comporte une surface interne 9a et une surface externe 9b opposées. Ces surfaces interne 9a et externe 9b se trouvent en partie ou complètement dans le champ de vision du capteur optique 13 lorsque le boitier 6 reçoit le capteur optique 13.

Ces surfaces interne 9a et externe 9b peuvent être sensiblement planes, voire totalement planes, dans le champ de vision de l'optique 14 du capteur optique 13.

En variante, ces surfaces interne 9a et externe 9b peuvent être de forme générale asphériques, voire hyperboliques.

Par ailleurs, afin d'éviter un phénomène de condensation entre l'optique 14 et l'élément optique 9, la surface interne 9a de l'élément optique 9 présente avantageusement une propriété antibuée. La surface interne 9a de l'élément optique 9 est la surface destinée à être agencée en regard de l'optique 14 du capteur optique 13. En particulier la surface interne 9a de l'élément optique 9 présente un revêtement antibuée.

En variante ou en complément, la surface interne 9a et/ou la surface externe 9b de l'élément optique 9 peut présenter une ou plusieurs des propriétés suivantes : hydrophobe, filtre infra-rouge, photocatalytique, super hydrophobe, lipophobe, hydrophile, ou encore super hydrophile, résistance aux gravillons, ou encore tout autre traitement de surface permettant de réduire l'adhésion des salissures.

En particulier, grâce à des propriétés hydrophobes de la surface externe 9b de l'élément optique 9, des gouttes d'eau éventuelles ruissèleront sur la surface externe 9b sans laisser de traces car l'eau ne pourra pas adhérer sur cette surface externe. Cela permet de limiter les possibilités d'adhérence des polluants organiques ou minéraux ainsi que la présence de traces d'eau sur l'élément optique 9 pouvant nuire au bon fonctionnement du système d'assistance à la conduite 1. Avantageusement, une solution liquide, telle qu'une solution de type Rain-X®, peut être déposée sur la surface externe 9b de l'élément optique 9 afin de former une pellicule hydrophobe.

Ces exemples de réalisation sont fournis à titre illustratif et non limitatif. Par exemple, l'Homme du métier peut utiliser un élément optique 9 transparent présentant une surface externe 9b ayant d'autres propriétés permettant de limiter l'adhérence des salissures sur cette surface externe 9b.

De manière optionnelle, l'élément optique 9 du dispositif de protection 3 peut également comprendre un système de dégivrage ou de désembuage intégré pour pouvoir garantir une bonne opérabilité du système d'assistance à la conduite 1 quelles que soient les conditions météorologiques, comme un filament ou une résistance de dégivrage par exemple.

### Deuxième sous-ensemble

Comme dit précédemment, le deuxième sous-ensemble C peut comporter un moteur 5 pour l'entrainement en rotation du premier sous-ensemble B. À cet effet, le moteur 5 est couplé au boitier 6 de façon à entrainer en rotation le boitier 6 et l'élément optique 9.

Le moteur 5 est monté rotatif autour d'un axe de rotation A2. L'axe de rotation A2 peut être confondu avec l'axe de rotation A1 du premier sous-ensemble B, et avec l'axe optique 15 du capteur optique 13.

Par ailleurs, on prévoit avantageusement, un agencement étanche à l'arrière du moteur 5 pour le passage des câbles ou fils afin de limiter l'entrée de vapeur d'eau et/ou autres contaminants à l'intérieur du dispositif de protection 3.

Le moteur 5 comporte un rotor 51 et un stator 53 fixe, le rotor 51 étant mobile en rotation par rapport au stator fixe 53.

Le boitier 6 et l'élément optique 9 sont solidaires du rotor 51 du moteur 5.

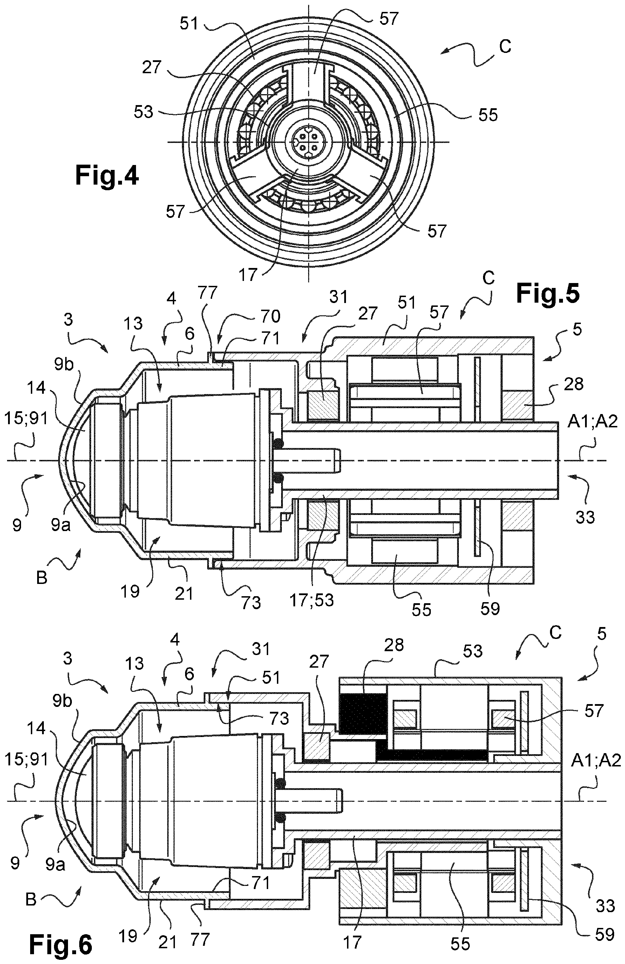

Selon les exemples illustrés sur les figures 3a à 5, le rotor 51 est disposé autour du stator 53. Le stator 53 est donc intérieur et le rotor 51 extérieur. Par ailleurs, dans l'exemple de la figure 5, le stator 53 peut former le support 17 du capteur optique 13. Autrement dit, le support 17 et le stator 53 sont réalisés d'une seule pièce.

Alternativement, comme illustré sur la figure 6, le stator 53 peut être agencé autour du rotor 51.

Par ailleurs, le moteur 5 est assemblé à l'arrière du boitier 6. Selon le mode de réalisation décrit, le moteur 5 est assemblé au boitier 6 du côté opposé à l'élément optique 9. On forme ainsi un bloc étanche empêchant ainsi l'introduction de salissures à l'intérieur du boitier 6 destiné à recevoir le capteur optique 13.

En outre, le moteur 5 est dans cet exemple agencé dans le prolongement du capteur optique 13. L'accessoire 4, le capteur optique 13 et le moteur 5 sont dans cet exemple alignés selon l'axe optique 15 du capteur optique 13.

Le moteur 5 est avantageusement creux. Il peut recevoir au moins en partie le capteur optique 13. En particulier, selon la configuration illustrée, le moteur 5 creux peut recevoir le support 17 du capteur optique 13 à l'arrière du capteur optique 13, c'est-à-dire du côté opposé à l'optique 14.

Selon la configuration illustrée sur les figures 2b à 3b avec le stator 53 interne et le rotor 51 externe, le stator 53 peut recevoir au moins en partie le support 17 du capteur optique 13.

Selon la configuration illustrée sur la figure 5, avec le rotor 51 externe et le stator 53 formant le support optique 17, le rotor 51 creux peut recevoir au moins en partie le stator 53 formant support 17 du capteur optique 13.

Selon la configuration illustrée sur la figure 6, avec le rotor 51 interne, c'est ce dernier qui peut recevoir au moins en partie le support 17 du capteur optique 13.

Le moteur 5 est par exemple alimenté électriquement par une alimentation reliée au circuit électrique général du véhicule 100 (en se référant également à la figure 1).

Il peut s'agir notamment d'un moteur électrique de petite taille, voire miniature.

Par moteur électrique de petite taille on entend dans le cadre de la présente invention un moteur pas à pas, un actuateur, un moteur à courant continu avec ou sans balai, un moteur asynchrone ou un moteur synchrone, dont la masse est inférieure à 10kg, voire inférieure à 1kg, en particulier utilisés pour actionner des équipements pour les véhicules.

Par moteur électrique miniature on entend dans le cadre de la présente invention un moteur pas à pas, un actuateur, un moteur à courant continu avec ou sans balais, un moteur asynchrone ou un moteur synchrone, dont la masse est inférieure à 200g, voire inférieure à 100g, de préférence comprise entre 30 g et 100g, par exemple entre 30 g et 60g.

À titre d'exemple non limitatif, le moteur 5 peut être plus particulièrement un moteur sans balais, aussi connu sous la dénomination « brushless motor » en anglais. Selon l'exemple illustré sur les figures 2b à 4, le moteur 5 comprend au moins un aimant 55 solidaire du rotor 51, et un nombre prédéfini de bobines électromagnétiques 57, en particulier au moins trois bobines électromagnétiques 57 montées sur le stator 53. Les bobines électromagnétiques 57 sont destinées à être alimentées pour permettre l'entrainement de l'aimant 55 solidaire du rotor 51. Le moteur 5 comprend à cet effet un circuit de commande 59 pour l'alimentation des bobines électromagnétiques 57. Ce circuit de commande 59 peut être relié à un faisceau d'alimentation électrique 61 relié au circuit électrique général du véhicule 100 (en se référant également aux figures 1 et 3a).

Le moteur 5 peut avoir une vitesse de rotation comprise entre 1000 et 50000 tours/minute, de préférence entre 5000 et 20000 tours/minute, et de manière encore préférée entre 7000 et 15000 tours/minute. De telles vitesses de rotation permettent l'élimination d'éventuelles salissures qui se seraient déposées sur l'élément optique 9 par effet centrifuge et permettent ainsi de maintenir l'optique 14 du capteur optique 13 propre pour assurer un fonctionnement optimisé du système d'assistance à la conduite 1.

Le dispositif de protection 3 comporte donc une partie mobile 31, aussi appelée partie tournante 31, et une partie fixe 33 (voir figure 3a, 5 ou 6).

La partie mobile 31 comprend au moins le rotor 51 du moteur 5 et au moins un élément mobile solidaire du rotor 51, tel que notamment l'accessoire 4, c'est-à-dire le boitier 6 et l'élément optique 9 dans cet exemple.

La partie fixe 33 comprend au moins le stator 53 du moteur 5. De même, la partie fixe 33 peut comprendre également un élément ou support fixé au stator 53. Bien entendu, l'élément ou support peut être fixé directement ou non au stator 53. De façon non limitative, dans cet exemple, la partie fixe 33 du dispositif motorisé 3 comporte le support 17 fixe du capteur optique 13. Ce support fixe 17 est notamment fixé au stator 53. Le support 17 du capteur optique 13 et le stator 53 comportent avantageusement des ouvertures respectives complémentaires 63, 65 pour permettre le raccordement du circuit de commande 59 au faisceau d'alimentation électrique 61, tel que cela est mieux visible sur la figure 3a.

En outre, le dispositif de protection 3, et plus particulièrement le deuxième sous-ensemble C, peut comprendre en particulier un ou plusieurs roulements 27, 28 (voir figures 2b à 6). Selon les exemples des figures 2b à 6, le deuxième sous-ensemble C comprend deux roulements 27, 28.

Ces roulements 27, 28 sont chacun agencés entre la partie mobile 31 et la partie fixe 33 du dispositif de protection 3. Les roulements 27, 28 sont de forme générale sensiblement annulaire. De plus, les deux roulements 27, 28 sont agencés de manière concentrique avec le moteur 5.

En se référant à l'exemple particulier illustré sur la figure 3a ou sur la figure 6, un des roulements, par exemple le roulement 27 peut être disposé entre le rotor 51 et une partie, notamment avant, du support 17 du capteur optique 13. L'autre roulement, le roulement 28 dans ces exemples, est disposé entre le rotor 51 et le stator 53 du moteur 5. En alternative, les deux roulements 27 et 28 peuvent être agencés entre le rotor 51 et le stator 53.

En alternative, les deux roulements 27 et 28 peuvent être agencés entre le rotor 51 et le stator 53. Notamment, selon la variante de réalisation illustrée sur la figure 5, les deux roulements 27, 28 sont agencés entre le rotor 51 et le stator 53 formant support 17 du capteur optique 13.

Selon l'exemple illustré sur les figures 2b à 4, les roulements 27 et 28 sont représentés comme des roulements à billes. Bien entendu, d'autres variantes sont envisageables. Avantageusement, au moins l'un des roulements 27, 28 peut être un roulement magnétique. Un tel roulement magnétique permet d'éviter le bruit et les frottements généralement provoqués en fonctionnement du dispositif de protection 3 utilisant des roulements mécaniques. Selon une variante, un roulement peut être magnétique et l'autre roulement peut être un roulement mécanique tel qu'un roulement à billes. Selon une autre variante, le dispositif motorisé 3 peut comprendre un unique roulement magnétique.

Enfin, on peut prévoir des moyens 67, tels que des clips, pour contraindre les roulements 27, 28 (voir figures 2b à 3b).

### Assemblage

En se référant aux figures 2b à 3b, 5 et 6, afin de permettre l'assemblage du premier sous-ensemble B avec le deuxième sous-ensemble C, le dispositif de protecton 3 comporte au moins un moyen d'assemblage porté par le premier sous-ensemble et/ou porté par le deuxième sous-ensemble.

Selon le mode de réalisation décrit, le dispositif de protection 3 comporte en outre au moins un premier moyen d'assemblage 71 portée par le premier sous-ensemble B. De façon complémentaire, le dispositif de protection 3 peut comporter également au moins un deuxième moyen d'assemblage complémentaire 73 porté par le deuxième sous-ensemble C.

Le ou chaque premier moyen d'assemblage 71 est par exemple prévu pour coopérer avec un deuxième moyen d'assemblage complémentaire 73 associé et complémentaire.

L'emploi des termes premier et deuxième, concernant le premier moyen d'assemblage 71 et le deuxième moyen d'assemblage 73 permet de différencier et dénommer ces éléments. Cette dénomination n'implique pas une priorité ou dépendance d'un moyen d'assemblage par rapport à l'autre et on peut aisément interchanger de telles dénominations sans sortir du cadre de la présente description.

De façon générale, le ou les premiers moyens d'assemblage 71 et le ou les deuxièmes moyens d'assemblage 73 peuvent être appelés des moyens d'assemblage 70 complémentaires. En particulier, il s'agit de moyens d'assemblage 70 complémentaires portés d'une part par le premier sous-ensemble B et d'autre part par le deuxième sous-ensemble C.

La liaison entre les deux sous-ensembles B et C peut se faire à la périphérie de chaque sous-ensemble B, C. Plus précisément, cette liaison peut se faire à la périphérie du boitier 6, de forme générale cylindrique, et à la périphérie du rotor 51.

Autrement dit, le boitier 6 du premier sous-ensemble B présente à sa périphérie un ou plusieurs premiers moyens d'assemblage 71. De façon complémentaire, le rotor 51 du deuxième sous-ensemble C présente à sa périphérie un ou plusieurs deuxièmes moyens d'assemblage 73 prévus pour coopérer avec le(s) moyen(s) d'assemblage 71 du boitier 6.

Selon les différents modes de réalisation illustrés, le boitier 6 présente une jupe périphérique formant un premier moyen d'assemblage 71. De façon complémentaire, le rotor 51 présente une gorge périphérique formant un deuxième moyen d'assemblage 73 et configurée pour recevoir la jupe périphérique à l'assemblage des deux sous-ensembles B et C. La jupe périphérique et la gorge périphérique sont par la suite respectivement référencées par 71 et 73.

Le premier moyen d'assemblage 71, dans cet exemple réalisé par la jupe périphérique 71, est agencé du côté opposé à l'élément optique 9. Ceci correspond à l'arrière du boitier 6, et plus généralement à l'arrière du premier sous-ensemble B.

Le deuxième moyen d'assemblage 73, dans cet exemple réalisé par la gorge périphérique, est agencé du côté du rotor 51 situé en regard du boitier 6.

En d'autres termes, le boitier 6 et le rotor 51 présentent chacun une interface d'assemblage permettant l'assemblage des deux sous-ensembles B et C. Selon le mode de réalisation décrit, la jupe périphérique 71 du boitier 6 forme une interface d'assemblage. De façon complémentaire, l'extrémité 75 du rotor 51 (voir figures 2b et 3b) comprenant la paroi périphérique délimitant la gorge périphérique 73 forme une interface d'assemblage complémentaire. Il s'agit d'une extrémité 75 axiale ou longitudinale.

De plus, l'étanchéité entre les deux sous-ensembles B et C, c'est-à-dire dans cet exemple entre le boitier 6 et le rotor 51, peut se faire par collage. Bien entendu, tout autre moyen connu de l'Homme du métier peut être utilisé pour assurer l'étanchéité entre les deux sous-ensembles B et C.

Par ailleurs, on peut prévoir un moyen d'arrêt tel qu'une butée 77 permettant de limiter le déplacement axial du rotor 51. Cette butée 77 est par exemple formée par une nervure périphérique sur le boitier 6. Dans les exemples illustrés, la jupe périphérique 71 s'étend à partir de cette nervure périphérique ou butée 77 en direction du moteur 5.

Enfin, on peut prévoir au moins un moyen de verrouillage 79 (voir figure 2b) permettant de maintenir et verrouiller dans la position assemblée le premier sous-ensemble B avec le deuxième sous-ensemble C. À titre d'exemple non limitatif, le verrouillage peut se faire par encliquetage. On peut prévoir à cet effet, un ou plusieurs moyens d'encliquetage 79 tel qu'un pion d'encliquetage configuré pour s'engager dans une ouverture correspondante (non visible) dans la paroi du rotor 51 délimitant la gorge périphérique 73. On peut notamment prévoir que le verrouillage soit réalisé par un mouvement combiné de rotation puis encliquetage.

En variante, le verrouillage peut se faire par collage, soudage, ou encore soudage ultrasons. Bien entendu, tout autre moyen connu de l'Homme du métier peut être utilisé pour assurer le verrouillage en position des deux sous-ensembles B et C.

### Procédé d'assemblage

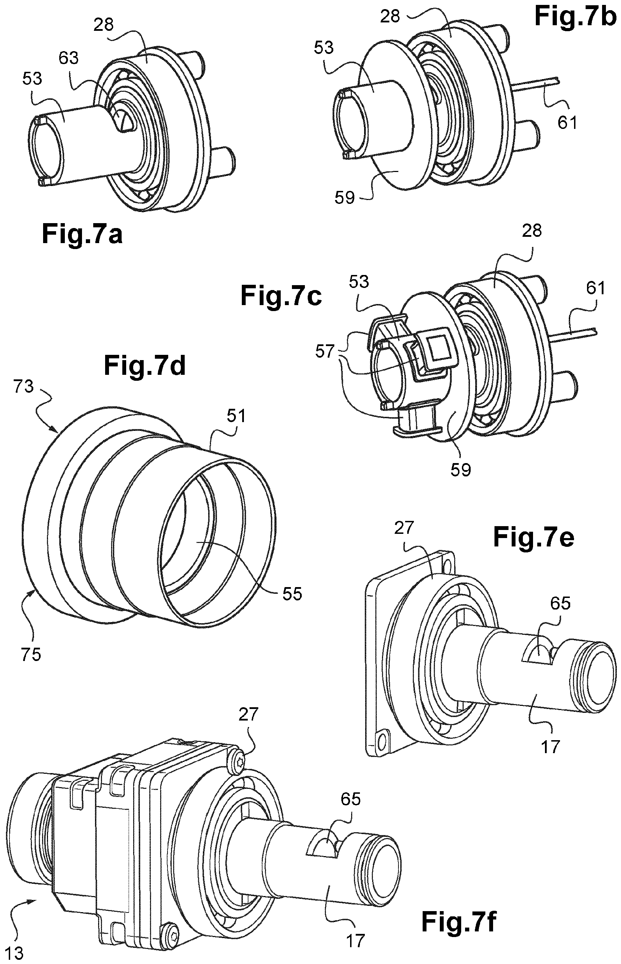

En se référant aux figures 7a à 7i, le dispositif de protection 3 tel que décrit précédemment en référence aux figures 2a à 4 peut être assemblé selon un procédé d'assemblage comprenant les étapes suivantes :
- on réalise d'une part le premier sous-ensemble B,
- on réalise d'autre part le deuxième sous-ensemble, et
- on assemble les deux sous-ensembles B et C.

Bien évidemment, le procédé d'assemblage tel que décrit ci-dessus peut s'appliquer aussi aux variantes illustrées sur les figures 5 et 6.

Comme évoqué précédemment, la réalisation du premier sous-ensemble B peut se faire par la réalisation en une seule pièce du boitier 6 et de l'élément optique 9.

La réalisation du deuxième sous-ensemble B peut comprendre différentes étapes d'assemblage.

Lors d'une étape illustrée sur la figure 7a, le roulement 28 peut être disposé autour du stator 53. Le circuit de commande 59 peut ensuite être disposé autour du stator 53 devant le roulement 28 (voir figure 7b). Ce circuit de commande 59 peut par la suite être relié au faisceau d'alimentation électrique 61. Lors d'une autre étape illustrée sur la figure 7c, les bobines électromagnétiques 57 peuvent être fixées sur le stator 53.

En parallèle, avant ou après ces différentes étapes, l'aimant 55 peut être fixé au rotor 51, par exemple à l'intérieur du rotor 51 (voir figure 7d), ou en variante sur l'extérieur du rotor 51 selon la configuration de la figure 6 avec un rotor 51 intérieur et un stator 53 extérieur.

Par la suite, le rotor 51 et le stator 53 peuvent être assemblés.

Dans une étape intermédiaire du procédé d'assemblage, on monte le capteur optique 13 sur le support 17.

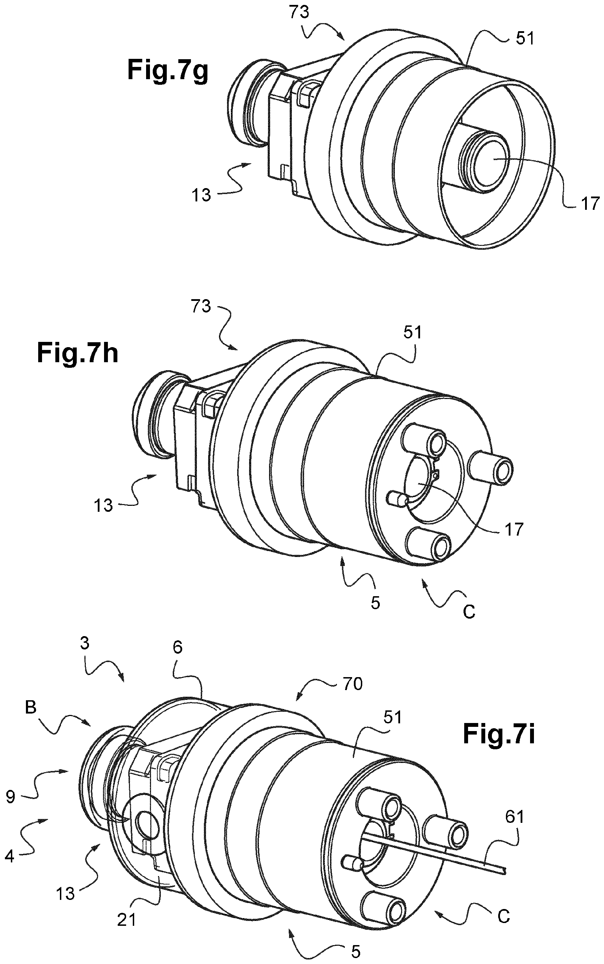

Dans une autre étape intermédiaire, et notamment avant assemblage des deux sous-ensembles B et C, le support 17 du capteur optique 13 peut être agencé à l'intérieur du moteur 5 du deuxième sous-ensemble C (figures 7g et 7h).

Le capteur optique 13 peut être agencé à l'intérieur du boitier 6 du premier sous-ensemble B (voir figure 7i), notamment lorsque le premier sous-ensemble B vient s'assembler au deuxième sous-ensemble C dans lequel est monté le support 17 du capteur optique 13.

En particulier, le premier sous-ensemble B et le deuxième sous-ensemble C sont assemblés l'un à l'autre selon une direction parallèle à l'axe optique 15 du capteur optique 13.

En outre, selon les modes de réalisation illustrés, les deux sous-ensembles B et C sont assemblés de façon à être alignés selon l'axe optique 15.

Enfin, les deux sous-ensembles B et C peuvent être verrouillés dans la position assemblée l'un à l'autre. Et on peut prévoir en outre une ou plusieurs étapes pour étanchéifier le dispositif de protection 3.

Bien entendu, l'ordre des étapes de ce procédé peut être interverti.

Ainsi, en fonctionnement, l'actionneur, plus précisément le moteur 5, entraine en rotation le boitier 6 et l'élément optique 9 solidaire du boitier 6, par rapport au capteur optique 13. La rotation du boitier 6 et de l'élément optique 9 assure l'élimination des salissures du fait de la force centrifuge que ces dernières subissent. Le champ de vision du capteur optique 13 est ainsi toujours dégagé et propre.

De plus, la réalisation de ce dispositif de protection 3 en deux sous-ensembles B et C distincts qui s'assemblent de façon simple, permet de simplifier l'assemblage du dispositif de protection 3 ainsi que son montage sur le véhicule automobile 100.

## Revendications

1. Dispositif de protection (3) d'un capteur optique (13) de système d'assistance (1) à la conduite pour véhicule automobile (100), le capteur optique (13) comprenant une optique (14),
**caractérisé en ce que** le dispositif de protection (3) comporte deux sous-ensembles (B, C) distincts assemblés, dont :
- un premier sous-ensemble (B) est monté mobile en rotation autour d'un axe de rotation (A1) et comporte :
• un boitier (6) configuré pour recevoir au moins en partie le capteur optique (13) et
• un élément optique (9) configuré pour être disposé en amont de l'optique (14) du capteur optique (13), et
- un deuxième sous-ensemble (C) comporte un actionneur (5) configuré pour entrainer en rotation le premier sous-ensemble (B) l'actionneur (5) étant un moteur (5) comprenant un stator (53) et un rotor (51).

2. Dispositif (3) selon la revendication 1, comportant au moins un premier moyen d'assemblage (71) porté par le premier sous-ensemble (B).

3. Dispositif (3) selon la revendication précédente, dans lequel le boitier (6) du premier sous-ensemble (B) présente à sa périphérie au moins un premier moyen d'assemblage (71), tel qu'une jupe périphérique.

4. Dispositif (3) selon l'une des revendications 2 ou 3, comportant au moins un deuxième moyen d'assemblage (73) porté par le deuxième sous-ensemble (C).

5. Dispositif (3) selon la revendication précédente, dans lequel le rotor (51) présente ledit au moins un deuxième moyen d'assemblage (73).

6. Dispositif (3) selon l'une quelconque des revendications précédentes, comportant au moins un moyen de verrouillage (79) du premier sous-ensemble (B) assemblé au deuxième sous-ensemble (C).

7. Dispositif (3) selon l'une quelconque des revendications précédentes, dans lequel l'élément optique (9) est réalisé d'une seule pièce avec le boitier (6).

8. Dispositif (3) selon l'une quelconque des revendications précédentes, comportant en outre un support (17) du capteur optique (13).

9. Dispositif (3) selon l'une des revendications précédentes, dans lequel le moteur (5) est creux.

10. Dispositif (3) selon l'une des revendications 1 ou 9, dans lequel le moteur (5) est un moteur sans balais comprenant des bobines électromagnétiques (57) montées solidaires du stator (53) et un aimant (55) solidaire du rotor (51).

11. Système d'assistance (1) à la conduite pour véhicule automobile (100) comportant un capteur optique (13) comprenant une optique (14), **caractérisé en ce qu'**il comporte en outre un dispositif de protection (3) du capteur optique (13) selon l'une quelconque des revendications précédentes.

12. Procédé d'assemblage d'un dispositif de protection (3) selon l'une quelconque des revendications 1 à 10, **caractérisé en ce qu'**il comprend les étapes suivantes :
- on réalise d'une part le premier sous-ensemble (B) comportant :
• le boitier (6) configuré pour recevoir au moins en partie le capteur optique (13) et
• l'élément optique (9) configuré pour être disposé en amont de l'optique (14) du capteur optique (13),
- on réalise d'autre part le deuxième sous-ensemble (C) comportant l'actionneur (5) configuré pour entrainer en rotation le premier sous-ensemble (B), et
- on assemble les deux sous-ensembles (B, C).

13. Procédé selon la revendication précédente, comprenant les sous-étapes suivantes dans lesquelles :
- on monte le capteur optique (13) sur un support (17), et
- on agence le support (17) du capteur optique (13) à l'intérieur d'un élément (51) creux de l'actionneur (5) du deuxième sous-ensemble (C).

14. Procédé selon la revendication précédente, dans lequel le premier sous-ensemble (B) et le deuxième sous-ensemble (C) sont assemblés l'un à l'autre selon une direction parallèle à l'axe optique (15) du capteur optique (13).
